# EUROPEAN PATENT SPECIFICATION

(11) **EP 1 583 092 B1**
(45) Date of publication and mention of the grant of the patent: **07.11.2007**
(21) Application number: 05251955.0
(22) Date of filing: 30.03.2005
(51) Int. Cl.: G11B 17/04, G11B 33/12

(54) **Gate construction of a slot-in format type disk device**
Aufnahmekonstruktion eines Plattengeräts vom Typ Schlitzformatzuführung
Construction pour une porte d'entrée de dispositif de disque du type à format fente

(30) Priority: 30.03.2004 JP 2004100464
(43) Date of publication of application: 05.10.2005
(73) Proprietor: ORION ELECTRIC CO., Ltd., Takefu-City, Fukui 915-8555 (JP)
(72) Inventor: Azai, Kouji, Takefu-city Fukui 915-8555 (JP); Moroishi, Masahide, Takefu-city Fukui 915-8555 (JP)
(74) Representative: Paget, Hugh Charles Edward

(56) References cited:
- DE-C1- 10 235 668
- US-A1- 2002 044 517
- PATENT ABSTRACTS OF JAPAN vol. 2000, no. 13, 5 February 2001 (2001-02-05) & JP 2000 298906 A (FUJITSU LTD), 24 October 2000 (2000-10-24)

## Description

### BACKGROUND OF THE INVENTION

### Field of the Invention

The present invention relates to the gate construction of a disk device having a slot-in format wherein, in addition to preventing the penetration of dirt or dust, it is able to support the disk.

### Description of the Related Art

Conventionally, a gate construction in a disk device provided with a slot-in mechanism which transports in or transports out disks such as a DVD and the like is formed from a felt of a single construction in which, for example, as shown by the loading slot 2 of a player 1 such as that shown in the drawing of Figure 2 of the disc player of Japanese Laid Open Patent Publication S63-298761, formation is accomplished of a single article slit (the "slit" comprising the cut-out through which the object is passed) for transmitting a disk. In addition, as shown by the gate cover 138, shown in the drawing of Figure 9A of the "recording/reproducing device" described in Japanese Laid Open Patent Publication 2002-334499, the gate construction is formed from the felt of a single construction in which are formed a mask aperture 140, multiple intersecting cut-out apertures 144 and slit 145 (the "slit" comprising the insertion of a surface cut-out).

In a gate construction in which insertion and extraction is accomplished of a disk in a disk device provided with a slot-in mechanism, the function is sought to prevent, for example the penetration of dust to within the disk device, and the penetration of dirt adhering to the disk to within the disk device at the time of inserting the disk, up to the point in which the user manually inserts the disk into the slot in mechanism to the position where it reaches to the gate, and to the position at which the user manually withdraws the disk from the slot in mechanism until it is completely withdrawn. Up to that time the disk is prevented from moving, and is prevented from being withdrawn from the gate and dropping down, while maintaining the disk in position. The slit for the article of an ordinary means is closed on both sides, and by inserting a disk, the slit is pushed open from opposing directions, at which time the disk is interposed between both sides while maintaining its elastic restorative force.
Patent Publication 1:
   Japanese Laid Open Patent Publication S63-298761
Patent Publication 2:
   Japanese Laid Open Patent Publication 2002-334499

US-A-2002/0044517 shows a gate construction according to the preamble of claim 1 in which a felt member has a long slit for disk insertion. This slit is crossed by short perpendicular slits, to reduce resistance to disk movement.

### SUMMARY OF THE INVENTION

The gate construction in a disk device having the conventional slot in format referred to above, notwithstanding there being the unanticipated function of maintaining the disk, since in constructing a single felt sheet there is weak force for maintaining the disk, and since there is some variation in the strength and weakness of the elasticity of the felt itself, the disk maintenance force has been unstable. Since the force for maintaining the disk has been unstably weak, it has not been possible to continuously hold the disk in a specified position, and there are cases in which the disk has slipped from the specified position or cases in which the supporting force has succumbed to the force of gravity and the disk has fallen down. The particular problem of weak supporting force, in most cases has occurred with the vertical type disk which more easily receives the influence of gravity than one in the horizontal position.

Both the gate construction of Japanese Laid Open Patent Publication SHO 63-298761 and Japanese Laid Open Patent Publication 2002-334499 have in common, the conventional problems referred to above. Since there is single felt construction, the disk maintenance force is weak, and unstable. In the case of Japanese Laid Open Patent Publication S63-298761, even before and after the disk device slot in mechanism transports the disk, there is the problem that the disk maintenance force is weak. In the case of Japanese Laid Open Patent Publication 2002-334499, there is the problem that the disk maintenance force is ordinarily weak prior to transporting the disk by the disk slot in the mechanism, and that the disk maintenance force for inserting the disk becomes even weaker after the disk is transported.

Concerning the disk maintenance force in the gate construction, attention must be given to yet another point, namely that of felt hardness. Ideally, the felt must have strong elasticity, and should not be too hard. If it is too hard, at the time that the disk makes an insertion or withdrawal to or from the single article slit there is a problem that too great a resistance is produced, particularly at the time of insertion. If the elasticity is made to be too strong, it becomes hard, and if the elasticity is too weak, there is a tendency towards increased softness. Conventionally excessive hardness has been avoided, and there is a sacrifice of elastic hardness, namely disk maintenance force. This presents a great dilemma in terms of increasing the maintenance force of the disk.

In terms of blocking the entry of dust or dirt adhering to a disk, since there is only a single layer of felt, there is concern that the penetration of dust or dirt cannot be prevented.

The present invention has as its objective to provide gate construction in a slot in disk device which, in order to resolve problems associated with the prior art, realizes a felt having strong elasticity, and appropriate hardness, and superior disk maintenance force.

In order to resolve the problems associated with conventional gate construction, the gate construction in the slot in format disk device of the present invention is as set out in Claim 1.

Preferably the gate construction is provided with a surface sheet in which a disk transmitting aperture is formed in the gate, and the first elastic felt is fixedly adhered to the rear surface of the surface sheet.

A greater number of intersecting slits may be formed in the second felt than in the first felt.

Multiple cutouts may be formed in the single article slit of the second felt.

The thickness in the front to rear direction of the second felt may be less than that of the 1st felt.

According to the present invention, by adding the second felt to the first felt, superior disk maintenance force can be realized with strong elasticity and appropriate hardness. By making the felt to be a double layer, the elasticity can be strengthened overall, and the disk maintenance force can also be strengthened. Since the disk maintenance force is strong, slippage or dropping of the disk can be prevented. Even with a vertical disk device in which the influence of gravity is large, the disk can be assuredly maintained, and prevented from dropping. By making the felt to be a double thickness, variation, elasticity and hardness can be eliminated. By using a second felt which has elasticity which is weaker than that of an elastic first felt, excessive hardness can be prevented. It is possible to use a conventional felt in the first felt, and by adding a second felt, the disk maintenance force can be adjusted. By means of the double layer felt construction of the first felt and the second felt, double weighted dust prevention construction can be achieved, and the function of preventing the entry of dust in the air or of dirt adhering to the disk can be strengthened. In addition, even if a cut-out is formed in the second felt, since the first felt is close to the outside, there is no loss of dust prevention.

By means of the surface sheet, protection can be provided against staining or against the loss of the felt.

By the features of Claims 3, 4 and 5, it is possible to adjust the elasticity or hardness of the 2nd felt, realizing superior disk maintenance with strong elasticity and appropriate hardness.

### BRIEF DESCRIPTION OF THE DRAWINGS

Fig. 1 is an explanatory diagram of a gate construction embodying the present invention.
Fig. 2 is an explanatory diagram of a second gate construction embodying the present invention.
Fig. 3 is an explanatory diagram of a third gate construction embodying to the present invention.
Fig. 4 is a rear surface diagram of a surface sheet.

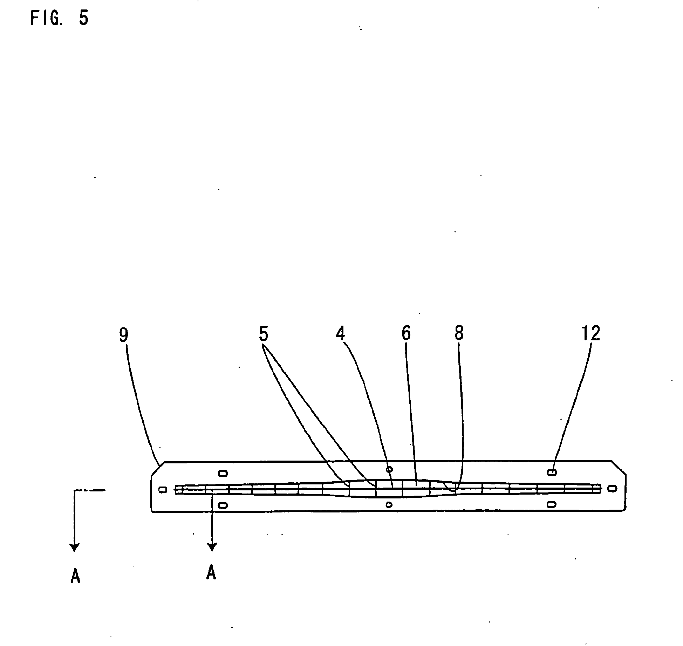

Fig. 5 is a front surface diagram of a fixedly adhered surface sheet, a 1st felt and a 2nd felt.

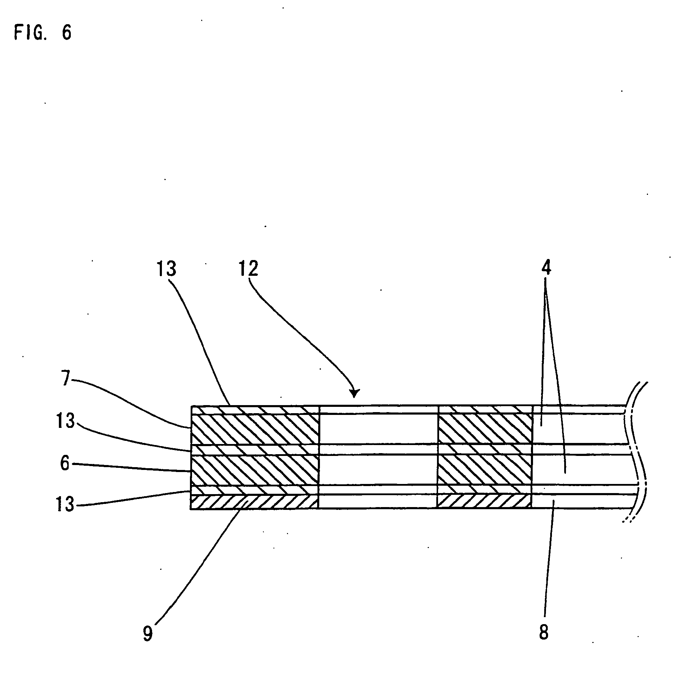

Fig. 6 is an enlarged cross-sectional diagram of the line A-A shown in Figure 5.
Fig. 7 is a rear surface diagram of a fixedly adhered surface sheet, a 1st felt and a 2nd felt.

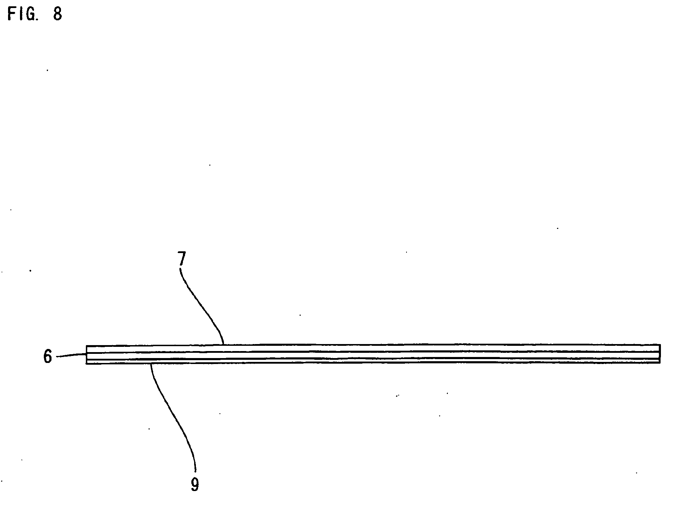

Fig. 8 is a plane surface diagram of a fixedly adhered surface sheet, a 1st felt and a 2nd felt.

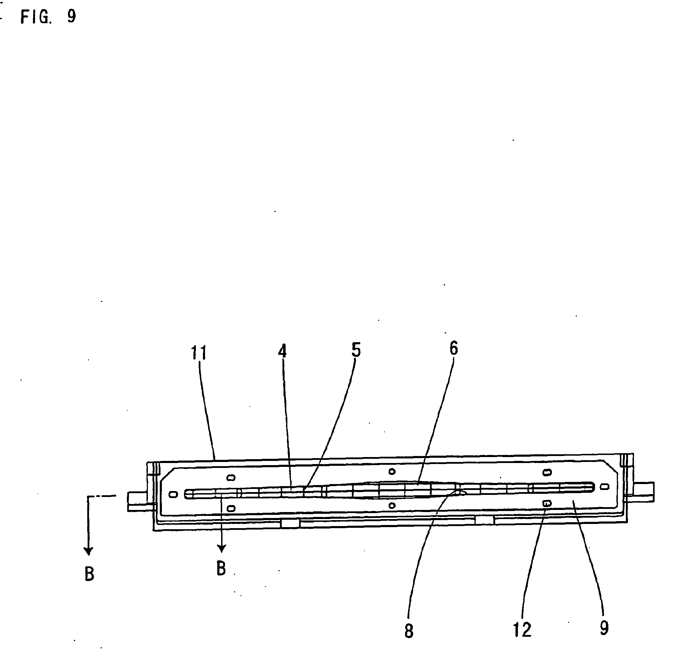

Fig. 9 is a front surface diagram of a fixedly adhered surface sheet, a 1st felt, a 2nd felt and a gate member.

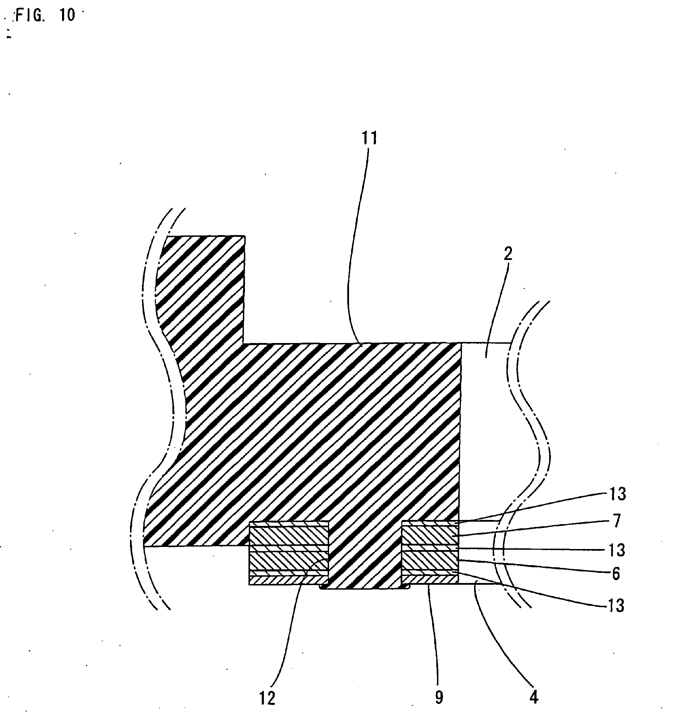

Fig. 10 is an enlarged cross-sectional diagram of the line B-B shown in Figure 9.

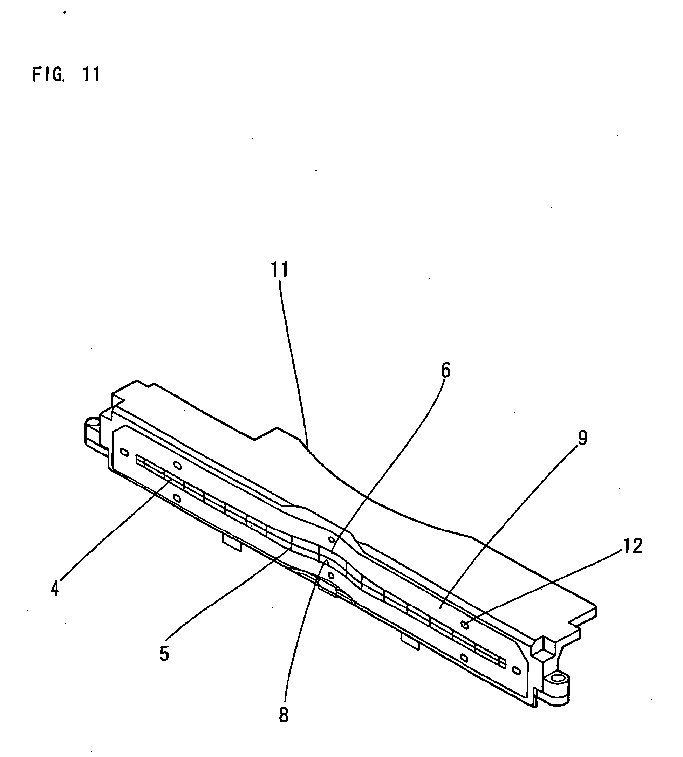

Fig. 11 is an oblique surface diagram of a fixedly adhered surface sheet, a 1st felt, a 2nd felt, and a gate member.
Fig. 12 is an oblique diagram which manifests a disk device.
Fig. 13 is an oblique diagram which manifests the state in which a disk in a vertical disk device is supported.
Fig. 14 is an explanatory diagram which manifests the state immediately prior to the manual insertion or immediately following the withdrawal of the disk by a user.
Fig. 15 is an explanatory diagram which manifests the state in which a disk is supported in the carry-in position of the insertion slot/mechanism.
Fig. 16 is an explanatory diagram which manifests the state in which a disk is supported in the withdrawal position.

### DETAILED DESCRIPTION OF THE PREFERRED EMBODIMENTS

An explanation is provided hereafter of preferred Embodiments for executing the gate construction of the disk device embodying the present invention, with reference to the drawings. However, the present invention is not restricted to only these Embodiments.

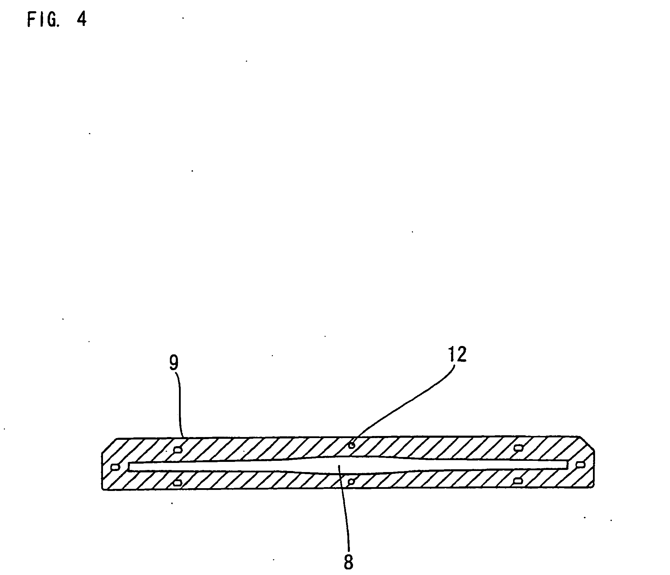

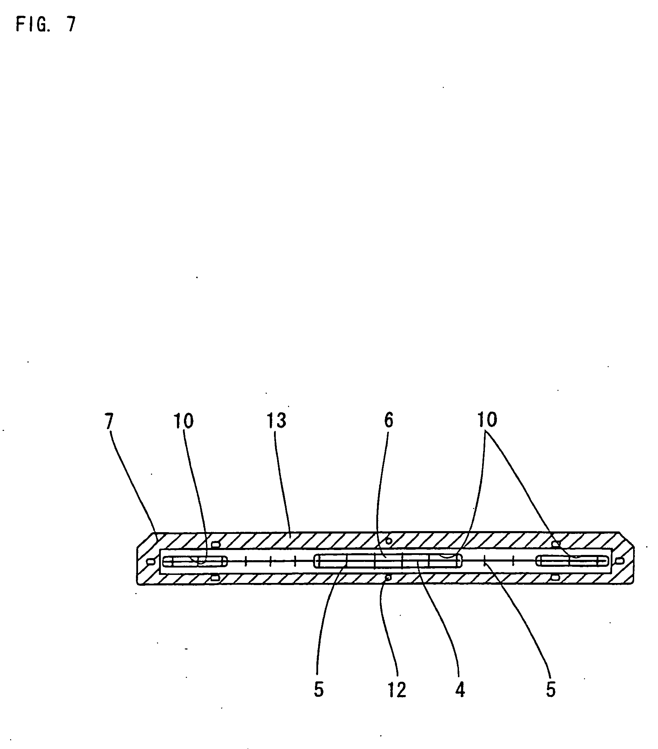

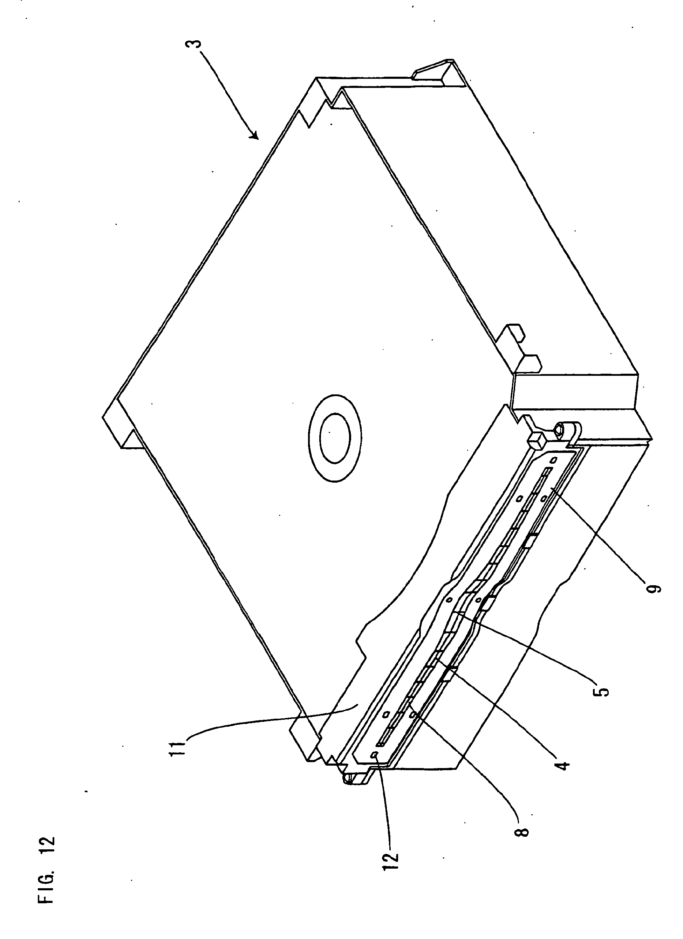

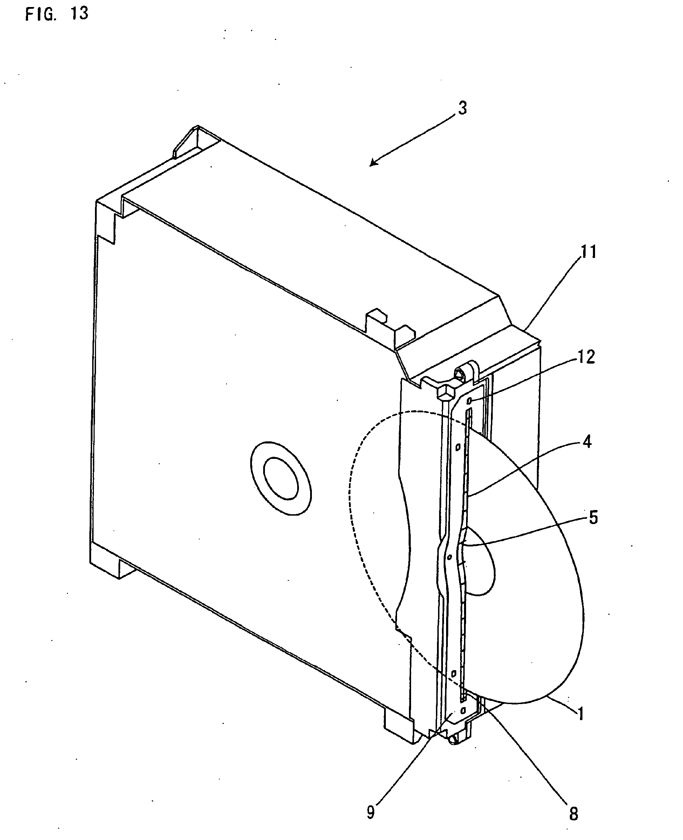

In the figures, 3 represents a disk device (see Figures 12 and 13) which internally houses a slot in mechanism, not shown in the drawing, and 11 represents a gate member in which a gate 2 is formed for inserting a disk to and withdrawing it from the disk device 3. The center of the gate member 11 is bent is to facilitate the insertion of the disk 1. In the figures, 6 represents an elastic 1st (first) felt, in which a single article slit 4 is formed with a penetrating cut in the lengthwise direction, and in which multiple intersecting slits 5 are formed with penetrating cuts in the single article slit 4. The 1st felt 6 has the function of maintaining the disk, and may make use of a conventional felt in its existent state. The intersecting slit 5 is a felt which is prevented from becoming too hard, and through which a disk 1 can be easily passed. In the figures, 7 represents a 2nd (second) felt in which a single article slit 4 containing at least one cut passes through, formed in the lengthwise direction, and which has elasticity which is weaker than that of the 1st felt 6. The 2nd felt 7 serves to support the function of maintaining the disk. In the figures, 9 represents a vinyl chloride surface sheet in which is formed a disk transmitting aperture 8, and which has the function of maintaining the felt. In the figures, 12 is a position determining hole for inserting a protrusion formed in the periphery of the gate 2 of gate member 11. The fixation method of each of the components, may include the free use of adhesives, sticky adhesions, two sided sticky tape 13, and others. However, in the present Embodiment, use is made of two sided sticky tape 13. By fixedly adhering the 1st felt 6 to the rear surface of the surface sheet 9, the 2nd felt 7 is fixedly adhered to the rear surface of the 1st felt 6, completing the position determining opening 12, by fixedly adhering the gate member 11 and the 2nd felt 7, and inserting a protrusion formed in the periphery of gate 2 of gate member 11, and accurate positioning can be accomplished of the gate construction. The slanted line shown in figure 4 and figure 7 is a sticky region onto which the two sided sticky tape is glued.

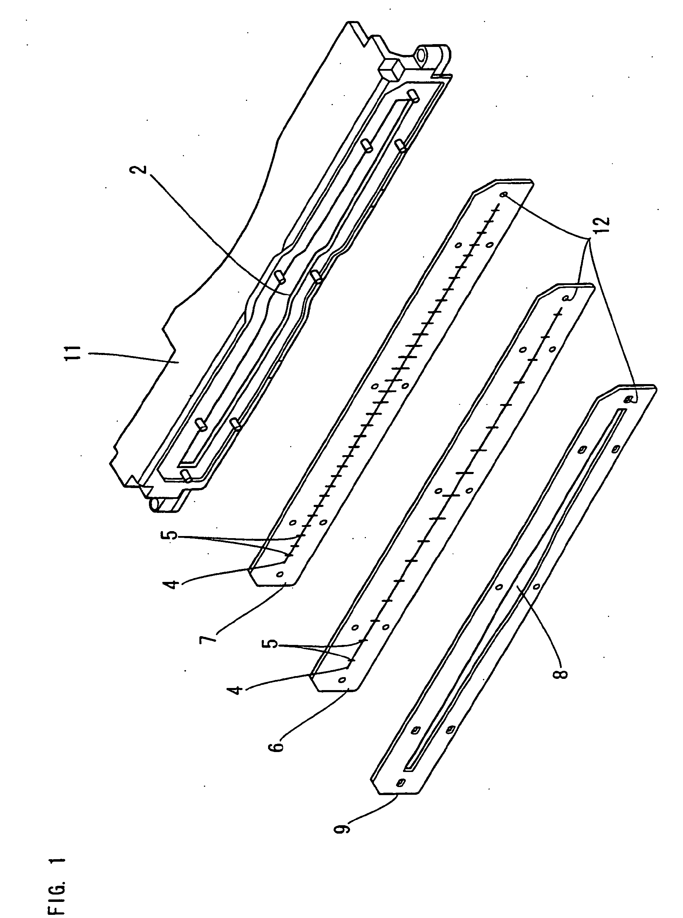

The 2nd felt 7 of the gate construction of Figure 1 has twice as many intersecting slits 5 as do the single article slit 4 and the 1st felt 6. If the intersecting slits 5 are increased, and the spacing is made shorter, then the 2nd felt 7 does not change overall. However, the elasticity and hardness of the individual cuts made by the intersecting slit 9 become smaller.

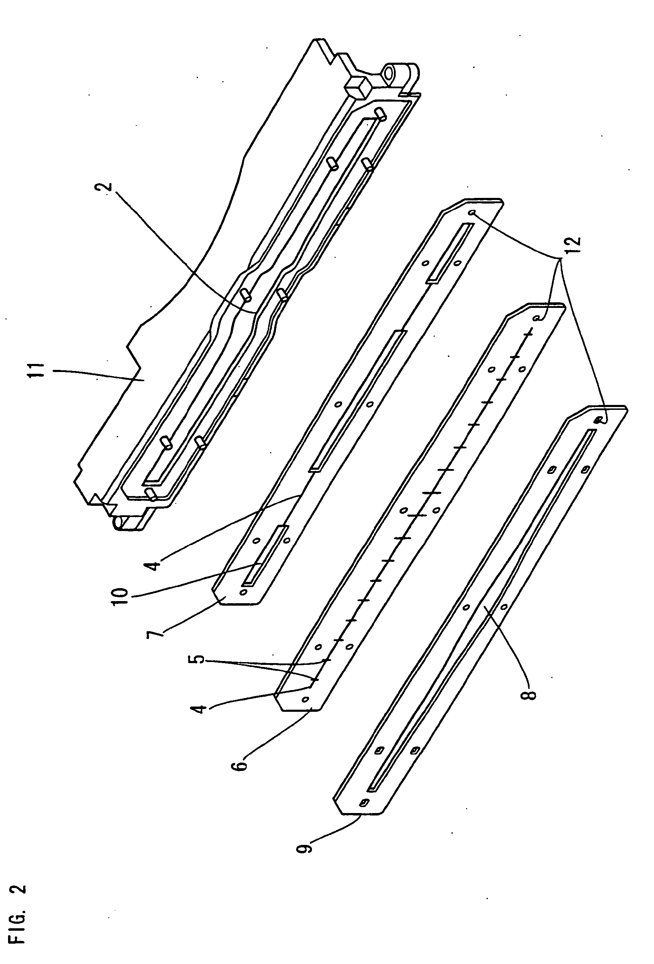

The 2nd felt 7 of the gate construction shown in Figure 2 has cutouts formed in three locations on a felt in which is formed a single article slit 4. If cutouts 10 are formed, then elasticity and hardness is reduced.

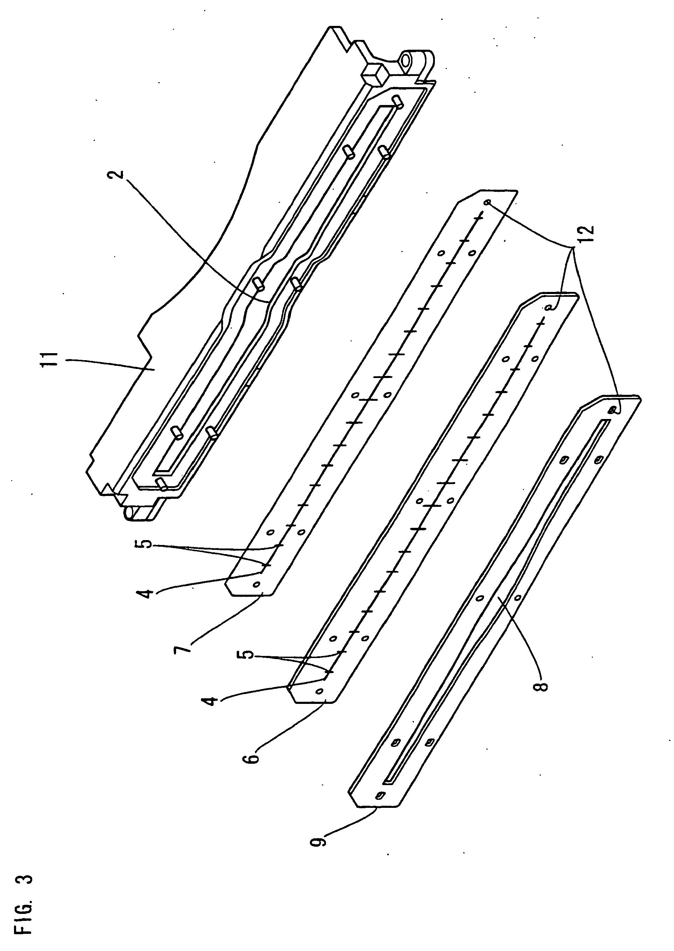

The 2nd felt 7 of the gate construction of Figure 3, has a fore and aft thickness which is thinner than that of the 1st felt 6, and the same number of intersecting slits 5 are formed as in the single article slit 4 and the 1st felt 6. If the felt is thin, then the overall elasticity and hardness of the 2nd felt 7 becomes small. Thus the 2nd felt 7 has weaker elasticity than the 1st felt 6, in the sense that it has lower resilience, i.e. is more yieldable and offers less resistance to an applied force.

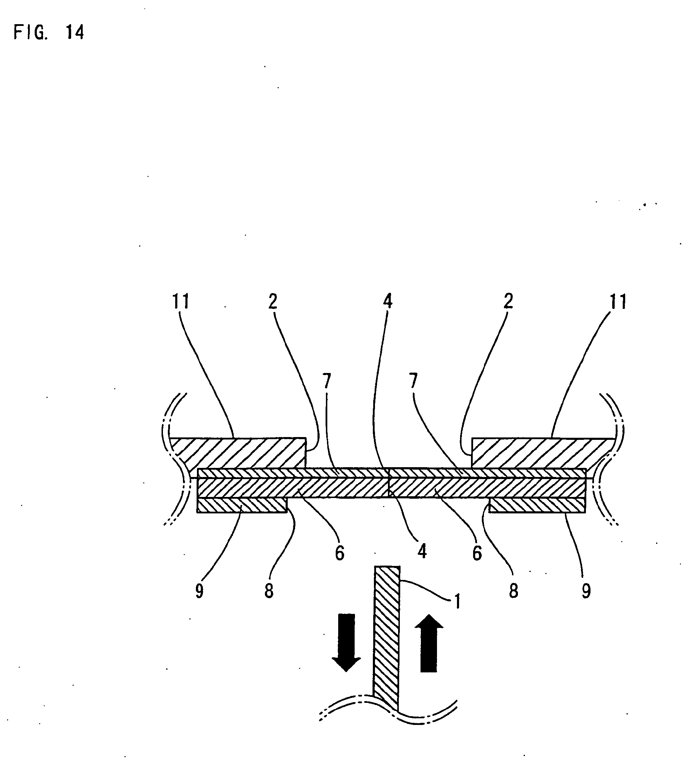

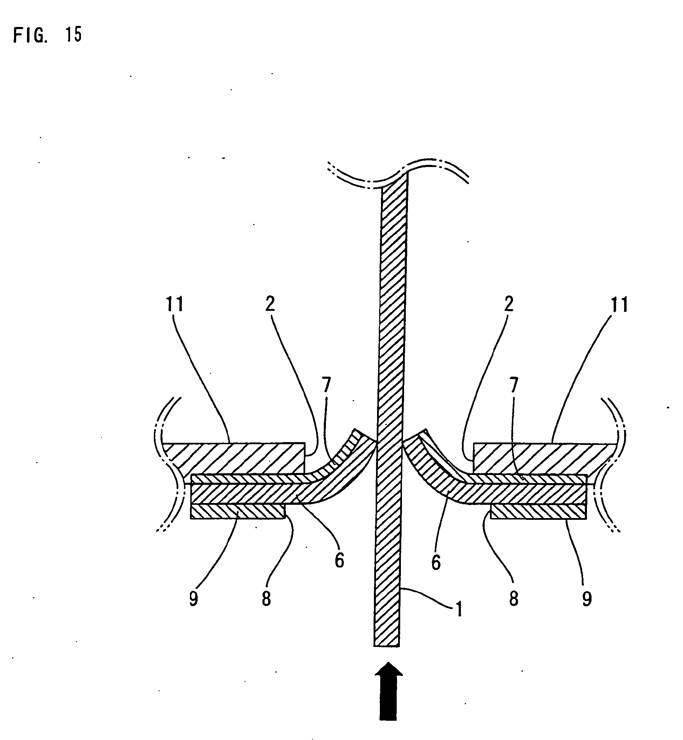

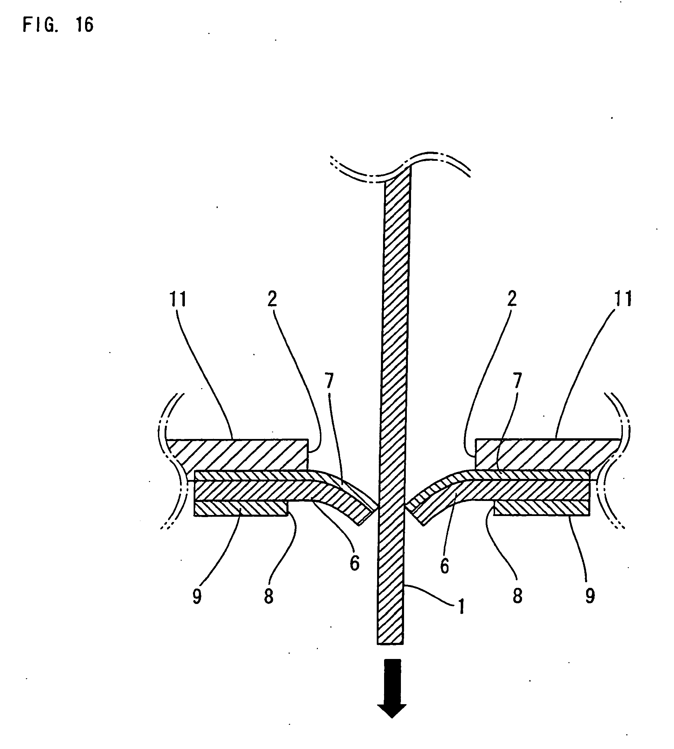

Figure 14, Figure 15, and Figure 16 show the disk maintenance state when inserting and withdrawing the disk 1 to and from the disk device 3. In the Embodiment shown in the drawings, the 2nd felt 7 uses a felt thickness which is thinner than that of the 1st felt 6. The ordinary single article slit 4 is closed fromboth sides, as shown in Figure 14. First of all, the user, as shown in Figure 14 moves the disk 1 toward and facing a single article slit 4. As shown by the state shown in Figure 15, the disk 1 is inserted until it reaches the transport in the position of the slot-in mechanism from the single article slit 4, and releasing the hand, the disk 1 freely inserts into the transport a in disk device 3. By inserting the disk 1, the single article slit 4 is internally pushed open on both sides, in an elastically formed state, the disk 1 being maintained and interposed in both directions, maintaining the elastic restorative force generated at the time. By making the 1st felt 6 and the 2nd felt 7 to fixedly adhere in a double layer, the disk 1 is held with strong force produced by the strengthened elasticity. Lastly, the user withdraws the disk 1 shown in Figure 14 from the disk device 3.

The 2nd felt 7 may also form a single slit 4 and a cut-out 10 in a felt in which the fore and after thickness is thinner than that of the 1st felt 6. The 2nd felt 7 may form a single article slit 4 and multiple intersecting slits 5 in a felt in which the fore and after thickness is thinner than that of the 1st felt 6. The 2nd felt 7 may also form a single article slit 4, intersecting slits 5 and a cut-out 10, in which use may be made of a felt which is thinner than that of the 1st felt 6. Gate construction may also be used in which use is not made of a surface sheet 9. A surface sheet 9 or a 1st felt 6 may be fixedly adhered to the rear surface of gate 2 rather than to the front surface. In making the disk support force of the 2nd felt 7 to be weaker than that of the 1st felt 6, it is not necessary to restrict it to the methods described above, but use may be made of any method.

## Claims

1. Gate construction in a disk device having a slot-in format provided with a gate (2) through which a disk is inserted into and withdrawn from the device, the gate (2) being provided with an elastically formed first felt (6) having with a single article slit (4) and multiple intersecting slits (5);
**characterized by** a second felt (7) which is fixedly adhered to the rear surface of the first felt (6), the second felt having at least a single article slit (4), the elasticity of the second felt (7) being weaker than that of the first felt (6).

2. Gate construction according to claim 1, wherein the first felt (6) is fixedly adhered to the rear surface of a surface sheet (9) having a disk transmitting aperture (8).

3. Gate construction according to claim 1 or claim 2, wherein the second felt (7) also has multiple intersecting slits (5) which are in a greater number in the second felt (7) than in the first felt (6).

4. Gate construction according to claim 1, 2 or 3, wherein multiple cutouts (10) are formed in the single article slit (4) of the second felt (7).

5. Gate construction according to any one of claims 1, 2, 3 and 4, wherein the thickness of the second felt (7) is less than that of the first felt (6).

## Patentansprüche

1. Aufnahmekonstruktion in einem Plattengerät mit einer Schlitzformat-Zuführung, die mit einer Aufnahme (2) bereitgestellt ist, durch welche eine Platte in das Gerät eingeführt und aus diesem wieder entnommen wird, wobei die Aufnahme (2) mit einem elastisch ausgebildeten ersten Filz (6) bereitgestellt ist, der einen Einzel-Artikelschlitz (4) und mehrere schneidende Schlitze (5) aufweist;
**gekennzeichnet durch** einen zweiten Filz (7), der an der hinteren Oberfläche des ersten Filzes (6) fest angehaftet ist, wobei der zweite Filz zumindest einen Einzel-Artikelschlitz (4) aufweist, und wobei die Elastizität des zweiten Filzes (7) kleiner als jene des ersten Filzes (6) ist.

2. Aufnahmekonstruktion nach Anspruch 1, worin der erste Filz (6) an der hinteren Oberfläche einer Oberflächenplatte (9) fest angehaftet ist, welche eine Plattenweitergabeöffnung (8) aufweist.

3. Aufnahmekonstruktion nach Anspruch 1 oder Anspruch 2, worin der zweite Filz (7) ebenfalls mehrere schneidende Schlitze (5) aufweist, die im zweiten Filz (7) in einer größeren Anzahl als im ersten Filz (6) vorliegen.

4. Aufnahmekonstruktion nach Anspruch 1, 2 oder 3, worin mehrere Ausschnitte (10) in dem Einzel-Artikelschlitz (4) des zweiten Filzes (7) ausgebildet sind.

5. Aufnahmekonstruktion nach einem der Ansprüche 1, 2, 3 und 4, worin die Dicke des zweiten Filzes (7) kleiner als jene des ersten Filzes (6) ist.

## Revendications

1. Construction de façade dans un dispositif de disque ayant un format mange disque équipé d'une façade (2) à travers laquelle un disque est introduit et extrait du dispositif, la façade (2) étant équipée d'un premier feutre formé élastiquement (6) présentant une fente à article unique (4) et des fentes multiples formant une intersection (5) ; **caractérisé en ce qu'**elle comporte un second feutre (7) qui est fixé par adhésion à la surface arrière du premier feutre (6), le second feutre ayant au moins une fente à article unique (4), l'élasticité du second feutre (7) étant plus faible que celle du premier feutre (6).

2. Construction de façade selon la revendication 1, dans laquelle le premier feutre (6) est fixé par adhésion à la surface arrière d'une feuille de surface (9) présentant une ouverture de transmission de disque (8).

3. Construction de façade selon la revendication 1 ou 2, dans laquelle le second feutre (7) présente également des fentes multiples formant une intersection (5) qui sont en nombre plus élevé dans le second feutre (7) que dans le premier feutre (6).

4. Construction de façade selon la revendication 1, 2 ou 3, dans laquelle des découpes multiples (10) sont formées dans la fente à article unique (4) du second feutre (7).

5. Construction de façade selon l'une quelconque des revendications 1, 2, 3 et 4, dans laquelle l'épaisseur du second feutre (7) est inférieure celle du premier feutre (6).
